# EUROPEAN PATENT APPLICATION

(11) **EP 4 825 642 A1**
(43) Date of publication of application: **21.10.2026**
(21) Application number: 25848733.9
(22) Date of filing: 07.07.2025
(51) Int. Cl.: B60L 53/30, B60L 53/80, B60L 53/60, H02J 7/00

(54) **BATTERY SLOT AND BATTERY CHARGING DEVICE INCLUDING SAME**

(30) Priority: 01.08.2024 KR 20240102642
(71) Applicant: LG Energy Solution, Ltd., Seoul 07335 (KR)
(72) Inventor: LIM, Geonhyeok, Daejeon 34122 (KR); KIM, Joohee, Daejeon 34122 (KR); PARK, Chanwoo, Daejeon 34122 (KR); PARK, Hyunyong, Daejeon 34122 (KR); CHOI, Jin Hyouk, Daejeon 34122 (KR); HONG, Sukmin, Daejeon 34122 (KR)
(74) Representative: BCKIP Part mbB
(86) International application number: PCT/KR2025/009732
(87) International publication number: WO 2026/029408

(57) **Abstract**

A battery slot according to the present invention, comprises: a slot frame forming an accommodation space into which a battery is inserted and including an entrance/exit formed by one side of the accommodation space being open; a door coupled to the slot frame to open and close the entrance/exit; a detection assembly that is coupled to the slot frame and detects whether the battery is a battery suitable for charging; and a control unit that sets the door to a locked state or an unlocked state on the basis of information detected by the detection assembly, wherein the detection assembly may include: a detection frame coupled to the slot frame and provided with an opening corresponding to the entrance/exit; a detection button that is disposed on the detection frame and is pressed and moved by the battery as the battery enters the opening; and a detection unit that detects movement of the detection button.

## Description

### Technical Field

The present disclosure relates to a battery slot and a battery charging device including a same.

### Background Art

Unlike primary batteries, secondary batteries may be charged and discharged, and thus may be applied to various fields such as a digital camera, a cellphone, a notebook computer, a hybrid vehicle, an electric vehicle, and aircraft. Secondary batteries include nickelcadmium batteries, nickel-metal hydride batteries, nickel-hydride batteries and the like, and, recently, lithium-ion batteries are being widely utilized.

In particular, a transportation means having an internal combustion engine gradually decreases, and, accordingly, demand for a hybrid vehicle and an electric vehicle is increasing. In response to this trend, demand for a two-wheeled vehicle used for a short-distance travel as well as for an electric motorcycle and an electric scooter having an electric motor as driving force is increasing, and a market thereof is gradually expanding.

In prior art, in order to charge a battery of an electric two-wheeled vehicle, a user used to charge by moving to an additional charging facility, or charge by connecting a plug-in type charging device to the electric two-wheeled vehicle. Nevertheless, in this case, there was a disadvantage that the user had to wait until the battery is completely charged, and that an operation thereof was impossible.

To solve these problems, disclosed is a battery charging device which may return a used battery, and be provided with a battery which is completely charged.

In a case of the battery charging device as such, it is necessary to identify whether the returned battery is a battery suitable for the battery charging device.

### Detailed Description of the Invention

### Technical Goals

The present disclosure is invented in consideration of the above-described problems, and the objective of the present disclosure is to provide a battery slot which may identify whether a battery is a battery suitable for a battery charging device through a structure of the battery and the battery charging device including the same.

### Technical solutions

According to the present disclosure, a battery slot includes a slot frame forming an accommodating space into which a battery is inserted and including an entrance formed after one side of the accommodating space is opened, a door coupled to the slot frame to open and close the entrance, a sensing assembly coupled to the slot frame, and sensing whether the battery is a battery suitable for charging, and a control part which sets the door in a locked state or an unlocked state based on information sensed by the sensing assembly, with the sensing assembly including a sensing frame coupled to the slot frame, and having an opening part corresponding to the entrance, a sensing button arranged at the sensing frame, and moving by being pressurized by the battery as the battery enters the opening part, and a sensing part sensing a movement of the sensing button.

The sensing button is arranged on an inner surface of the sensing frame, and is configured to move in a direction perpendicular to a sliding moving direction of the battery as the battery slidably moves along the inner surface of the sensing frame.

An outer circumferential surface of the sensing button coming in contact with the battery is formed with a curved surface.

The sensing button is disposed in plural to be arranged to be spaced apart from each other along a circumference of the opening part.

The sensing part is configured to sense a number of sensing buttons having moved by being pressurized by the battery among the plurality of sensing buttons, and the control part sets the door in an unlocked state in a case in which the number of the sensing buttons sensed by the sensing part is equal to or greater than a predetermined number.

The sensing frame further includes a button accommodating groove providing a moving space of the sensing button, and the sensing part is arranged on an inside of the button accommodating groove in order to be pressurized by the sensing button as the sensing button moves to the inside of the button accommodating groove.

The sensing part is configured to measure a pressure applied by the sensing button, and the control part sets the door in an unlocked state in a case in which a pressure sensed by the sensing part is equal to or greater than a predetermined reference pressure.

The sensing assembly further includes an elastic member respectively connected to the button accommodating groove and the sensing button to provide elastic force to the sensing button.

The elastic member is connected to both sides of the sensing button.

The battery slot further includes a locking member which is arranged to be adjacent to the entrance and is configured to lock or unlock the door according to a control signal of the control part.

The battery slot further includes a charging terminal which is configured to receive an electric signal from the battery by being electrically connected to the battery inserted into the accommodating space, and the control part determines whether to begin charging of the battery based on the electric signal of the battery which is received by the charging terminal.

The slot frame and the sensing frame are integrally formed.

The control part is configured to guide a result of identifying whether it is a suitable battery in a voice through a voice module.

A battery charging device according to the present disclosure includes a battery slot according to the present disclosure.

### Effects of the Invention

According to an aspect of the present disclosure, it is possible to primarily identify a battery through a structure of the battery. In a case where a battery inserted into a battery charging device is greater than a suitable battery, an insertion thereof into an opening part of a sensing frame itself is not possible, and, even in a case where the same is smaller than the suitable battery, a sensing button does not fully move by the battery inserted into the opening part of the sensing frame, thereby failing to satisfy a predetermined standard, thereby preventing an unsuitable battery from being inserted into a battery slot. Therefore, a display guiding battery information to a battery charging device is not required to be included, thereby minimizing limitations regarding an installation place of the battery charging device.

According to another aspect of the present disclosure, it is possible to secondly identify whether a battery, which is primarily identified whether the same is a physically suitable battery through a structure of the battery, is an electrically suitable battery through an identification module. It is possible to more precisely identify whether the same is a battery adequate for a battery charging device.

### Brief Description of Drawings

FIG. 1 is a drawing coarsely illustrating a battery charging device according to the present disclosure.
FIG. 2 and FIG. 3 are drawings illustrating a process of inserting a battery into a battery slot according to the present disclosure.
FIG. 4 is a perspective view illustrating a sensing assembly included in a battery slot according to the present disclosure.
FIG. 5 is a front view illustrating a sensing assembly included in a battery slot according to the present disclosure.
FIG. 6 is a drawing illustrating a battery being inserted into a sensing assembly included in a battery slot according to the present disclosure.
FIG. 7 is a drawing illustrating a coarse cross section of a sensing assembly included in a battery slot according to the present disclosure.
FIG. 8 is a drawing illustrating a coarse cross section of a battery being inserted into a sensing assembly included in a battery slot according to the present disclosure.

### Mode for Carrying Out the Invention

Before describing example embodiments in detail, the words and terminologies used in the specification and claims are not to be construed as limited to common or dictionary meanings but construed as meanings and concepts coinciding with the technical idea of the present disclosure under the principle that the inventor(s) may appropriately define the concept of the terms to explain his or her own invention in the best manner. Therefore, the example embodiments described herein and the configurations illustrated in the drawings are only the most desirable example embodiment of the present disclosure and do not fully cover the technical idea of the present disclosure, and thus, it should be understood that various equivalents and modification examples may be present as alternatives thereto when this application is filed.

The same reference numerals or symbols shown in each drawing of the present specification may indicate parts or elements that perform substantially the same function. For ease of explanation and understanding, different example embodiments may be described using the same reference numerals or symbols. That is, even though elements having the same reference numerals are shown in the plurality of drawings, the plurality of drawings may not all indicate one example embodiment.

In the following descriptions, terms in a singular form include terms in a plural form unless an apparently and contextually conflicting description is present. It should be understood that terms such as "comprise or include" and "form" are intended to indicate the presence of a feature, a number, a step, an operation, an element, a component or a combination thereof described in the specification and not intended to exclude the possibility of the presence or addition of one or more other features, numbers, steps, operations, elements, components or combinations thereof in advance.

In addition, it is clarified in advance that expressions such as upper side, upper portion, lower side, lower portion, side surface, front surface and rear surface are represented hereinafter with respect to a direction illustrated in a drawing and may be represented otherwise when the direction of a corresponding object changes.

Further, in the specification and claims, terms including ordinal numbers such as "first," "second," etc. may be used to distinguish between components or elements. These ordinal numbers are used to distinguish identical or similar components from each other, and the meaning of the terms should not be interpreted limitedly due to the use of such ordinal numbers. For example, components or elements combined with these ordinal numbers should not be interpreted as having a limited order of use or arrangement based on the number. If necessary, each ordinal number may be used interchangeably.

Hereinafter, example embodiments of the present disclosure will be described with reference to the attached drawings. However, the spirit of the present disclosure may not be limited to the example embodiments. For example, a person skilled in the art who understands the spirit of the present disclosure may suggest other example embodiments that are included within the scope of the spirit of the present disclosure through addition, change, or deletion of components or elements; however, such example embodiments are intended to be included within the scope of the present disclosure. The shapes and sizes of elements in the drawings may be exaggerated for clearer explanation.

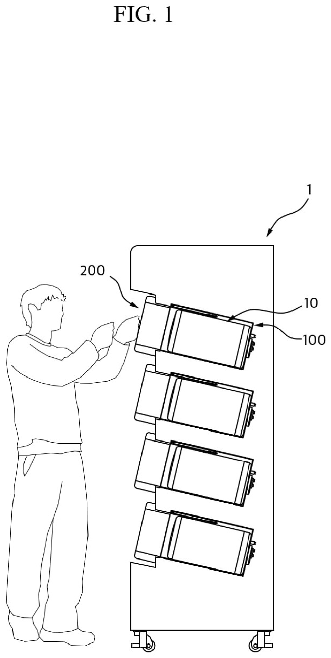

FIG. 1 is a drawing coarsely illustrating a battery charging device 1 according to the present disclosure.

Referring to FIG. 1, the battery charging device 1 according to the present disclosure may include a battery slot 100 and a sensing assembly 200.

The battery 10 may be inserted into the battery slot 100. The battery slot 100 may charge the inserted battery 10. The battery charging device 1 may include the plurality of battery slots 100. For instance, the battery charging device 1 may include eight battery slots 100 which are arranged by four rows in a horizontal direction, and by two columns in a vertical direction. A user may receive the battery 10 which is completely charged from each of the battery slot 100, and may return the pre-existing battery 10 to the battery slot 100.

The sensing assembly 200 may sense an insertion of the battery 10. The battery 10 may be inserted into the battery slot 100 through the sensing assembly 200.

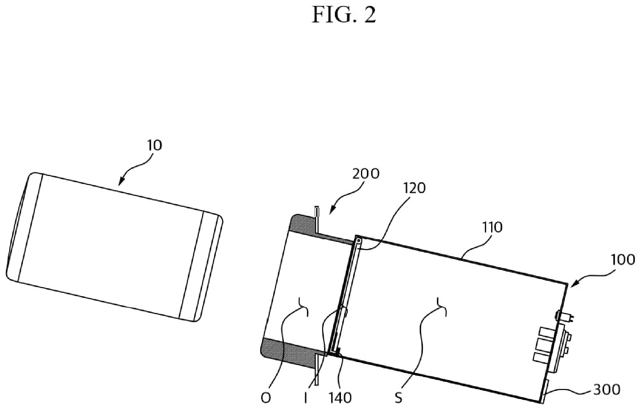

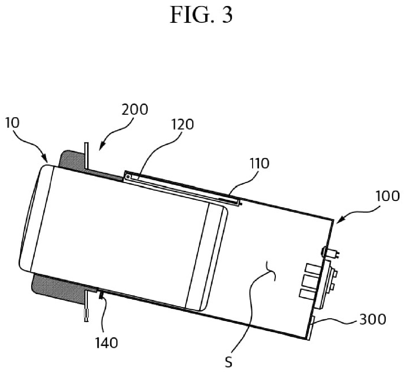

FIG. 2 and FIG. 3 are drawings illustrating a process of inserting the battery 10 into the battery charging device 1 according to the present disclosure.

Referring to FIG. 2 and FIG. 3, the battery slot 100 may include a slot frame 110, a door 120, a charging terminal C and the sensing assembly 200.

The slot frame 110 may form an accommodating space S into which the battery 10 is inserted. The slot frame 110 may include an entrance I which is formed after one side of the accommodating space S is opened. The battery 10 may be inserted into the accommodating space S, or may be discharged from the accommodating space S through the entrance I. The slot frame 110 may coarsely have a rectangular parallelepiped box shape, and may be a shape with one end portion opened. The slot frame 110 may provide a heat radiating fan (not illustrated). The heat radiating fan may be configured to discharge heat of the accommodating space S to the outside.

The door 120 may be coupled to the slot frame 110. The door 120 may open and close the entrance I of the slot frame 110. A circumference of the door 120 may match the entrance I of the accommodating space S. The door 120 may be rotated by being connected through a connecting means such as a hinge on an inner surface of the slot frame 110. The door 120 may be configured to be rotatable in the accommodating space S. The door 120 may be selectively rotatable by a locking device 140 controlling a rotation of the door 120 according to an electric signal. For instance, the locking device 140 may be a locking protrusion limiting a rotation of the door 120 on an opposite side of a rotating shaft by being arranged to be adjacent to the entrance I, and the locking device 140 may be operated according to an electric signal of a control part 300 to be described hereinafter. The locking device 140 may determine whether the door 120 is rotatable according to an operation of an actuator. As in FIG. 2, when the locking device 140 protrudes into an accommodating space, the door 120 may not be rotated in order for the battery 10 to be unable to be inserted into the accommodating space S. As in FIG. 3, when the locking device 140 does not protrude into an accommodating space, the door 120 may be rotated in the accommodating space S by an insertion of the battery 10.

Nevertheless, a specific structure of the locking device 140 is not limited to what is illustrated in FIG. 2, and may be configured in any structure if a movement of the door 120 may be adequately limited according to a door locking signal of the control part 300.

The charging terminal C may be electrically connected to the battery 10 inserted into the accommodating space S. The charging terminal C may be exposed to the inside of the accommodating space S. On one surface of the battery 10, a connector configured to be connected to the charging terminal C may be provided.

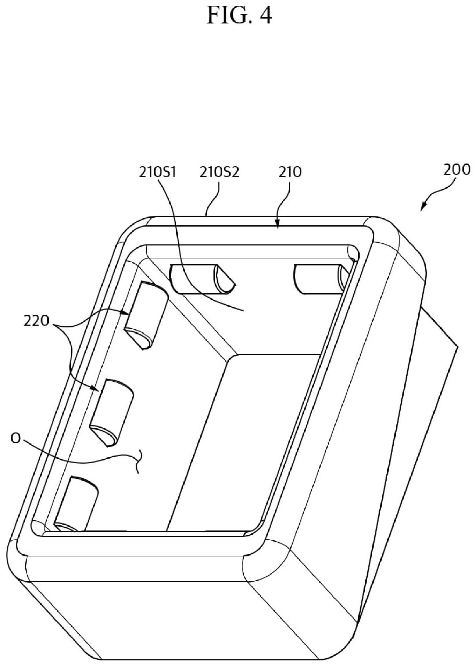

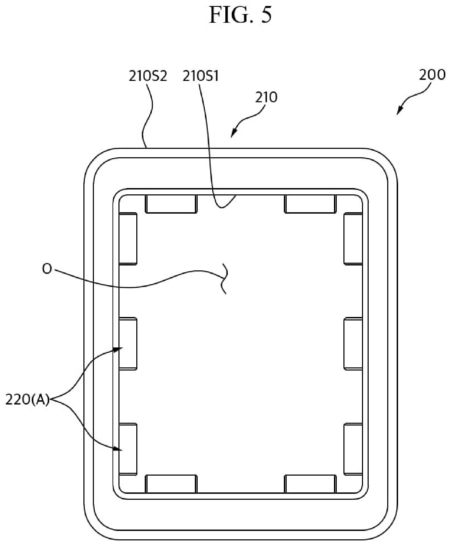

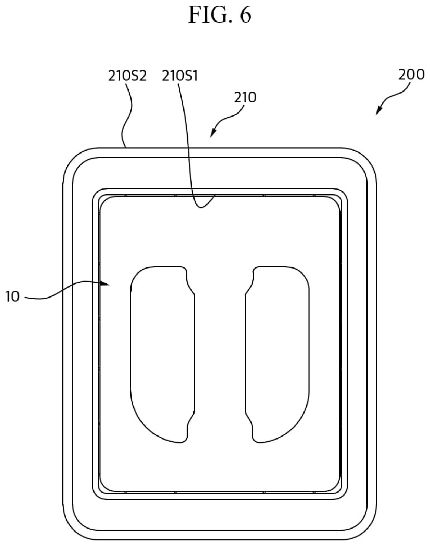

FIG. 4 is a perspective view illustrating the sensing assembly 200 included in the battery slot 100 according to the present disclosure. FIG. 5 is a front view illustrating the sensing assembly 200 included in the battery slot 100 according to the present disclosure. FIG. 6 is a drawing illustrating the battery 10 being inserted into the sensing assembly 200 included in the battery slot 100 according to the present disclosure.

Referring to FIG. 4 to FIG. 6, the sensing assembly 200 will be described in more detail.

The sensing assembly 200 may include a sensing frame 210, a sensing button 220 and a sensing part A.

The sensing frame 210 may be coupled to the battery slot 100. The sensing frame 210 may be coupled to the battery slot 100 on a side at which the entrance I of the battery slot 100 is provided. The sensing frame 210 may be provided with the opening part O corresponding to the entrance I of the battery slot 100. The opening part O may correspond to a shape of the battery 10. For instance, in a case in which the battery 10 is a rectangular parallelepiped, the opening part O may be in a rectangular shape corresponding to a bottom surface or a cross section of the rectangular parallelepiped. The battery 10 may pass through the opening part O of the sensing assembly 200 to pass through the entrance I of the battery slot 100 to be inserted into the accommodating space S of the battery slot 100.

In example embodiments, the sensing frame 210 may be integrally formed with the slot frame 110 of the battery slot 100, and may constitute one portion of an outer shape of the battery slot 100. Alternatively, the sensing frame 210 may be formed as a separate component distinguished from the slot frame 110 of the battery slot 100 to be coupled to the slot frame 110.

The sensing button 220 may be arranged at the sensing frame 210. The sensing button 220 may be arranged at an inner surface of the opening part O of the sensing frame 210. The sensing button 220 may be moved in a direction perpendicular to a sliding moving direction of the battery 10 as the battery 10 is slidably moved along an inner surface of the sensing frame 210 to be inserted into the battery slot 100.

The sensing button 220 is disposed in plural to be arranged to be spaced apart from each other along a circumference of the opening part O. For instance, in a case in which the opening part O is in a rectangular shape, the sensing button 220 may be respectively provided on four surfaces of an inner surface of the opening part O, and may be provided in plural respectively on the four surfaces. For instance, as illustrated in FIG. 5, the sensing button 220 may be arranged by three on two surfaces of an inner surface of the opening part O, and by two on two surfaces thereof, to constitute 10 in total.

The sensing button 220 may have an outer circumferential surface being a curved surface or a slope which comes in contact with the battery 10 as the battery 10 is inserted. Therefore, the sensing button 220 may be smoothly pressed as the battery 10 is inserted, thereby minimizing breakage.

The sensing part A may sense a movement of the sensing button 220. The sensing part A may be a sensor mounted in the sensing button 220. For instance, the sensing button 220 may be made of a rubber material or a sponge material with a hollow inside, and the sensing part A may, when the sensing button 220 is pressed by the battery 10 which is inserted by being mounted in an empty inner space of the sensing button 220, sense the same. The sensing part A may be pressurized by the battery 10 to sense a movement of the sensing button 220 which moves in a direction facing an outer surface 220S2 from an inner surface 210S1 of the sensing frame 210. The sensing part A may sense the number of the sensing buttons 220 which are moved by being pressurized by the battery 10 among the plurality of sensing buttons 220. The sensing part A may measure pressurizing force applied by the sensing button 220. The sensing part A may be a sensor accommodated in the sensing button 220. The sensor may be a motion-sensitive sensor sensing a movement of the sensing button 220 or a pressure measuring sensor configured to measure pressurizing force applied by the sensing button 220.

Referring to FIG. 2 and FIG. 3 again, the battery slot 100 may include the control part 300.

The control part 300 may set the door 120 in a locked state based on information sensed by the sensing assembly 200. The control part 300 may set the door 120 in an unlocked state based on information sensed by the sensing assembly 200. The control part 300 may control a movement of the locking device 140. The control part 300 may be arranged at one end portion of the slot frame 210. The control part 300 may include an electronic circuit. The control part 300 may include a communication unit. The control part 300 may electrically acquire a sensing signal of the sensing part A. The control part 300 may be electrically connected to an actuator operating the locking device 140. In a case in which the number of the sensing buttons 220 sensed by the sensing part A is equal to or greater than a predetermined number, the control part 300 may operate the locking device 140 to set the door 120 in an unlocked state. For instance, as the battery 10 is inserted, in a case in which the sensing part A has sensed a movement of 9 sensing buttons 220 among 10 sensing buttons 220, the control part 300 may accordingly operate the locking device 140 not to protrude into an accommodating space to set the door 120 to be rotatable. In a case in which pressurizing force sensed by the sensing part A is a predetermined reference pressure, the control part 300 may operate the locking device 140 to set the door 120 in an unlocked state. The predetermined reference pressure may be a reference pressure which has to be exceeded by all pressurizing forces applied by each of the sensing buttons 220. Alternatively, the predetermined reference pressure may be a reference pressure which has to be exceeded by all sums of pressurizing forces applied by each of the sensing buttons 220.

According to such a configuration of the present disclosure, the battery charging device 1 may identify whether the battery 10 is a battery suitable to the battery charging device 1 through the structure of the battery 10. Battery swapping in the battery charging device 1 may be performed by a user. Because a battery which is not suitable to the battery charging device 1 may be inserted by a mistake or error of a user, identifying a battery at the battery charging device 1 is indispensable. Such identifying of the battery may be performed by various methods such as near-field communication (NFC), quick-response (QR) codes and the like, and, in a case of such methods, an NFC recognition device, a QR code recognition camera and the like may have to be included in a battery charging device. In particular, because a display providing a guidance with respect to corresponding information to a battery charging device or a battery may have to be necessarily included, limitations may arise in terms of an installation place of a battery charging device.

Nevertheless, the battery charging device 1 of the present disclosure may not be provided with a display (monitor). The battery charging device 1 may primarily identify a battery through a structure of the battery 10. In a case in which the battery 10 inserted into the battery charging device 1 is greater than a suitable battery, an insertion thereof into the opening part O of the sensing frame 210 itself is not possible, and, even in a case where the same is smaller than the suitable battery, the sensing button 220 does not fully move by a battery inserted into the opening part O of the sensing frame 210 thereby failing to satisfy a predetermined standard, thereby preventing an unsuitable battery from being inserted into the battery slot 100. Therefore, the battery charging device 1 according to the present disclosure may not be provided with a display, thereby minimizing limitations in terms of an installation place of the battery charging device 1.

The control part 300 may be configured to identify whether the battery 10 is an adequate battery by being electrically connected to the battery 10. The control part 300 may be configured to selectively supply a power source to the charging terminal C. The control part 300 may be electrically connected to the inserted battery 10 through the charging terminal C to acquire information of the battery 10 by identifying a battery management system (BMS) of the battery 10. The control part 300 may identify whether the battery 10 is the suitable battery 10 by sending battery information acquired by identifying the BMS to a server.

The charging terminal C of the battery charging device 1 may be configured to transmit and receive an electric signal to and from the battery 10. The charging terminal C may transmit an electric signal received from the battery 10 to the control part 300, and the control part 300 may, based on the electric signal of the battery 10 received from the charging terminal C, decide whether the inserted battery 10 is a battery suitable for charging to determine whether to begin charging of the battery 10. For instance, in a case in which an electric signal received from the battery 10 is different from an electric signal of a battery suitable for a charging standard, the control part 300 may decide that the inserted battery 10 is unsuitable for charging, and may not begin charging. Alternatively, in a case in which an electric signal received from the battery 10 is identical to an electric signal of a battery suitable for a charging standard, the control part 300 may decide that the inserted battery 10 is suitable for charging, and may supply charging electric power to the battery 10 through the charging terminal C to begin charging of the battery 10.

In other words, the control part 300 may decide whether the battery 10 inserted through the charging terminal C which is electrically connected to the battery 10 is suitable for charging, and, in a case in which the same is the suitable battery 10, may supply charging power to the charging terminal C, and, in a case in which the same is the unsuitable battery 10, may not supply charging power to the charging terminal C.

Therefore, the battery 10 which is primarily identified whether the same is the physically suitable battery 10 through a structure of the battery 10 may be secondly identified whether the same is the electrically suitable battery 10 through an identification module. Whether the battery 10 is suitable for the battery charging device 1 may be more precisely identified.

In example embodiments, the battery charging device 1 may further include a voice module (not illustrated) configured to transmit a voice guidance message to a user. The control part 300 may control the voice module (not illustrated) to guide a result of identifying whether a battery is suitable in a voice. The control part 300 may, in a case in which the result of the identifying is that the battery is suitable, control the voice module (not illustrated) to guide that the battery is suitable to the user in a voice, and guide a charging progressing result. The control part 300 may, in a case in which the result of the identifying is that the battery is unsuitable, control the voice module (not illustrated) to guide to the user that the battery is unsuitable in a voice, and guide a charging progressing prohibition result.

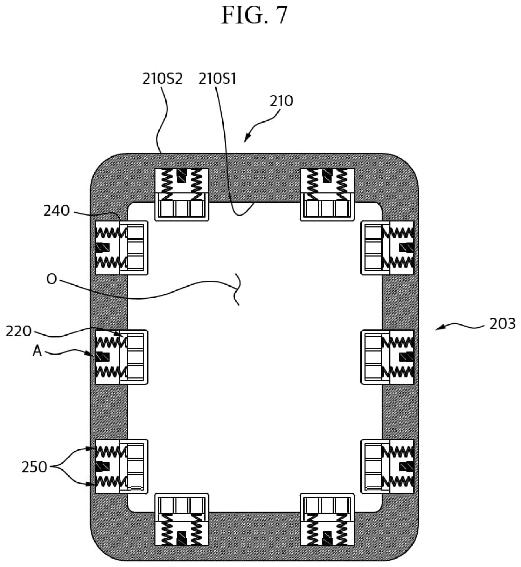

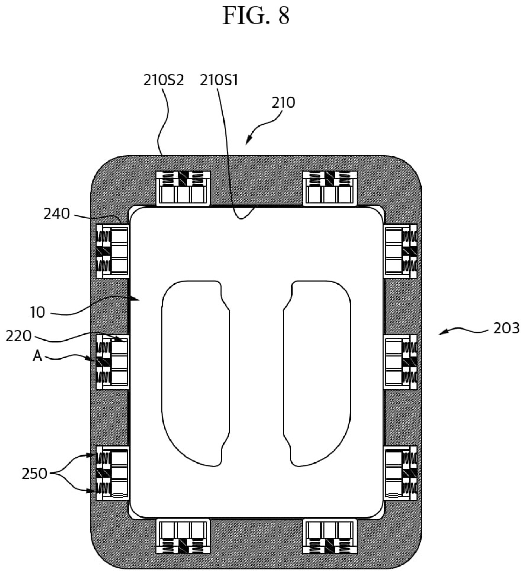

FIG. 7 is a drawing illustrating a coarse cross section of a sensing assembly 203 included in the battery charging device 1 according to the present disclosure. FIG. 8 is a drawing illustrating a coarse cross section of a state in which the battery 10 is inserted into the sensing assembly 203 included in the battery charging device 1 according to the present disclosure.

Referring to FIG. 7 and FIG. 8, the sensing frame 210 may further include a button accommodating groove 240. The sensing assembly 203 may further include an elastic member 250.

The button accommodating groove 240 may provide a moving space of the sensing button 220. The button accommodating groove 240 may provide a moving space in which the sensing button 220 may move in a direction of facing the outer surface of the sensing frame 210 from the inner surface thereof and in a direction opposite thereto. The button accommodating groove 240 may be in a groove shape formed on an inner surface of the sensing frame 210. The sensing part A may be accommodated on the inside of a button accommodating groove. The sensing button 220 may protrude to the outside of the button accommodating groove 240 before the battery 10 is inserted. The sensing button 220 may, when the battery 10 is inserted, be pressurized by the battery 10 to move to the inside of the button accommodating groove 240. The sensing part A may, as the sensing button 220 is pressurized by the battery 10 to move to the inside of the button accommodating groove 240, be pressurized by the sensing button 220. Accordingly, the sensing part A may sense a movement of the sensing button 220 inserted into the button accommodating groove 240.

The elastic member 250 may be respectively connected to the button accommodating groove 240 and the sensing button 220. The elastic member 250 may provide elastic force in a direction being in parallel with a moving direction of the sensing button 220 to the sensing button 220.

In a circumstance in which an external force by the battery 10 is not applied to the sensing button 220, the elastic member 250 may apply elastic force to the sensing button 220 in order for the sensing button 220 to protrude to the outside of the button accommodating groove 240.

The elastic member 250 may be provided in plural on the inside of one button accommodating groove 240. For instance, referring to FIG. 7 and FIG. 8, the plurality of elastic members 250 may be arranged to be spaced apart from each other in a direction being in parallel with an inner surface (an opposite surface of an outer circumferential surface formed with a curved surface) of the sensing button 220 to elastically and respectively support an inner surface of the sensing button 220.

The sensing part A may be arranged between the plurality of elastic members 250. For instance, referring to FIG. 7 and FIG. 8, the plurality of elastic members 250 may elastically support both side edge areas of an inner surface of the sensing button 220, and the sensing part A may be arranged to face a central area of an inner surface of the sensing button 220.

According to such an arrangement structure, because the elastic member 250 may stably apply elastic force to the sensing button 220, according to insertion and removal of the battery 10, the sensing button 220 may stably and slidably move in a reciprocating manner to the inside of the button accommodating groove 240, and also, the sensing part A arranged between the elastic members 250 may stably sense a movement of the sensing button 220 and a pressure applied by the sensing button 220.

As described above, even though the present disclosure is described focusing on preferred example embodiments with reference to the attached drawings, it is apparent that those skilled in the art will recognize that many obvious variations can be made from this description without departing from the scope of the present disclosure. Therefore, the scope of the present disclosure should be interpreted by the claims, which are written to include examples of many of these variations.

## Claims

1. A battery slot comprising:
a slot frame forming an accommodating space into which a battery is inserted and comprising an entrance formed after one side of the accommodating space is opened;
a door coupled to the slot frame to open and close the entrance;
a sensing assembly coupled to the slot frame, and sensing whether the battery is a battery suitable for charging; and
a control part which sets the door in a locked state or an unlocked state based on information sensed by the sensing assembly,
wherein the sensing assembly comprises:
a sensing frame coupled to the slot frame, and having an opening part corresponding to the entrance;
a sensing button arranged at the sensing frame, and moving by being pressurized by the battery as the battery enters the opening part; and
a sensing part sensing a movement of the sensing button.

2. The battery slot of claim 1, wherein the sensing button is arranged on an inner surface of the sensing frame, and is configured to move in a direction perpendicular to a sliding moving direction of the battery as the battery slidably moves along the inner surface of the sensing frame.

3. The battery slot of claim 1, wherein an outer circumferential surface of the sensing button coming in contact with the battery is formed with a curved surface.

4. The battery slot of claim 1, wherein the sensing button is disposed in plural to be arranged to be spaced apart from each other along a circumference of the opening part.

5. The battery slot of claim 4, wherein the sensing part is configured to sense a number of sensing buttons having moved by being pressurized by the battery among the plurality of sensing buttons, and
wherein the control part sets the door in an unlocked state in a case in which the number of the sensing buttons sensed by the sensing part is equal to or greater than a predetermined number.

6. The battery slot of claim 1, wherein the sensing frame further comprises a button accommodating groove providing a moving space of the sensing button, and
wherein the sensing part is arranged on an inside of the button accommodating groove in order to be pressurized by the sensing button as the sensing button moves to the inside of the button accommodating groove.

7. The battery slot of claim 6, wherein the sensing part is a pressure measuring sensor which may measure a pressure applied by the sensing button, and
wherein the control part sets the door in an unlocked state in a case in which a pressure sensed by the sensing part is equal to or greater than a predetermined reference pressure.

8. The battery slot of claim 6, wherein the sensing assembly further comprises an elastic member respectively connected to the button accommodating groove and the sensing button to provide elastic force to the sensing button.

9. The battery slot of claim 8, wherein the elastic member is connected to both sides of the sensing button.

10. The battery slot of claim 1, further comprising a locking member which is arranged to be adjacent to the entrance and is configured to lock or unlock the door according to a control signal of the control part.

11. The battery slot of claim 1, further comprising a charging terminal which is configured to receive an electric signal from the battery by being electrically connected to the battery inserted into the accommodating space,
wherein the control part determines whether to begin charging of the battery based on the electric signal of the battery which is received by the charging terminal.

12. The battery slot of claim 1, wherein the slot frame and the sensing frame are integrally formed.

13. A battery charging device comprising a battery slot according to any one claim among claim 1 to claim 12.
